# EUROPEAN PATENT APPLICATION

(11) **EP 4 737 368 A1**
(43) Date of publication of application: **06.05.2026**
(21) Application number: 24848398.4
(22) Date of filing: 02.08.2024
(51) Int. Cl.: B65H 37/04, B65H 37/00, B32B 37/10, B32B 37/14

(54) **LAMINATION PROCESS FOR RFID ELECTRONIC TAG FOR TIRE AND LAMINATION MECHANISM FOR RFID ELECTRONIC TAG FOR TIRE**

(30) Priority: 02.08.2023 CN 202310968731
(71) Applicant: Qingdao Highway IOT Technology Co., Ltd., Qingdao, Shandong 266112 (CN)
(72) Inventor: DONG, Lanfei, Qingdao,Shandong 266112 (CN); CHEN, Haijun, Qingdao,Shandong 266112 (CN); WANG, Luxin, Qingdao,Shandong 266112 (CN); TENG, Xuezhi, Qingdao,Shandong 266112 (CN)
(74) Representative: Winter, Brandl - Partnerschaft mbB
(86) International application number: PCT/CN2024/109628
(87) International publication number: WO 2025/026445

(57) **Abstract**

The present application provides a lamination process for an RFID electronic tag used in a tire and a lamination mechanism for an RFID electronic tag used in a tire. The lamination process for the RFID electronic tag used in the tire includes: moving a lower-layer rubber compound and an upper-layer rubber compound by a driving component in a conveying direction; pressing the upper-layer rubber compound and the lower-layer rubber compound together by a pressing component to press an RFID electronic tag between the upper-layer rubber compound and the lower-layer rubber compound into the rubber compound, where during pressing the RFID electronic tag, the driving component stops moving the upper-layer rubber compound and the lower-layer rubber compound; after the pressing is completed by the pressing component, continuously moving the rubber compound pressed with the RFID electronic tag by the driving component. The present application solves an problem in the prior art where RFID electronic tags are easily deformed after the lamination process for the RFID electronic tag.

## Description

The present application claims a priority from Chinese patent application No. 202310968731.4 entitled "LAMINATION PROCESS FOR RFID ELECTRONIC TAG FOR TIRE AND LAMINATION MECHANISM FOR RFID ELECTRONIC TAG FOR TIRE", which is filed with CNIPA on August 2, 2023, and the entire contents of which are incorporated into the present disclosure by reference.

### FIELD

The present application relates to a technical field of tire device, and in particular to a lamination process for an RFID electronic tag used in a tire and a lamination mechanism for an RFID electronic tag used in a tire.

### BACKGROUND

In traditional tire tread manufacturing processes, vulcanized tags serve as unique identifiers throughout the tire production process. Before Radio Frequency Identification (RFID) electronic tags are implanted into tires, some pre-processing is required: an RFID chip is encapsulated within a specially formulated rubber compound.

Currently, when wrapping tire RFID electronic tags in rubber, the RFID electronic tags are typically placed between two layers of rubber sheets and pressed and bonded manually, and the lamination process is manually completed. This method is prone to secondary contamination of the RFID tags and rubber; it is inefficient, and the tag products cannot meet the needs of subsequent automated production. Furthermore, the inconsistent nature of worker operation leads to significant waste and defects, and the process requires a high level of operator skill.

Some solutions employ mechanized processing to place the RFID electronic tag on a bottom layer of rubber strip (sheet), and use a pair of rollers to drag and press the bottom and top rubber strips together, thereby finally completing the lamination process. The above described process uses a pair of rollers to continuously drag two layers of rubber strips, but it is easy to cause tensile deformation of the rubber due to the inherent characteristics of rubber. Furthermore, in actual use, since the total winding path lengths of the upper and lower-layer rubber compounds are different, under the same tension, the strip passing through the longer winding path may produces greater tensile deformation during the dragging process by the pressure rollers than the strip passing through the shorter winding path. This results in uneven thickness of the two rubber sheets after lamination, generating internal stress and causing deformation in the final product or other stages of the production process. Moreover, during the continuous dragging of the rubber strips (sheets) by the pressing component, the tensile deformation of the rubber creates a difference in tensile deformation between the two layers. This causes the RFID tag placed on the bottom rubber strip (sheet) to shift when it comes into contact with the top rubber strip (sheet) during pressing, resulting in a difference in the posture of the RFID tag between the two rubber strips after lamination.

Therefore, it can be seen that the existing lamination process for the RFID electronic tag has problems such as instability after lamination, susceptibility to deformation, differences in the posture of the RFID tags after lamination, and products do not meet requirements.

### SUMMARY

The main purpose of this application is to provide a lamination process for an RFID electronic tag used in a tire and a lamination mechanism for an RFID electronic tag used in a tire to solve the problem of deformation of RFID electronic tags after lamination in existing lamination processes for the RFID electronic tag.

To achieve the above purpose, according to an aspect of the present application, a lamination process for an RFID electronic tag used in a tire is provided, which includes: moving a lower-layer rubber compound and an upper-layer rubber compound by a driving component in a conveying direction; pressing the upper-layer rubber compound and the lower-layer rubber compound together by a pressing component to press an RFID electronic tag between the upper-layer rubber compound and the lower-layer rubber compound into the rubber compound, where during pressing the RFID electronic tag, the driving component stops moving the upper-layer rubber compound and the lower-layer rubber compound; after the pressing is completed by the pressing component, continuously moving the rubber compound pressed with the RFID electronic tag by the driving component.

In an optional embodiment, the lamination process for the RFID electronic tag used in the tire further includes: the pressing component is movably arranged, and when the pressing component presses the upper-layer rubber compound and the lower-layer rubber compound, the pressing component moves in a direction parallel to the conveying direction, and presses the upper-layer rubber compound and the lower-layer rubber compound together within a predetermined distance.

In an optional embodiment, the lamination process for the RFID electronic tag used in the tire further includes: when the pressing component presses the upper-layer rubber compound and the lower-layer rubber compound, the pressing component moves in a direction opposite to the conveying direction.

In an optional embodiment, the lamination process for the RFID electronic tag used in the tire further includes: after the pressing component completes the pressing of the RFID electronic tag, the pressing component moves in the reverse direction to an initial position.

In an optional embodiment, the lamination process for the RFID electronic tag used in the tire further includes: when the pressing component presses the upper-layer rubber compound and the lower-layer rubber compound, the pressing component fully presses the upper-layer rubber compound and the lower-layer rubber compound together.

In an optional embodiment, the lamination process for the RFID electronic tag used in the tire further includes: when the pressing component presses the upper-layer rubber compound and the lower-layer rubber compound, the pressing component pre-presses the upper-layer rubber compound and the lower-layer rubber compound, and partially presses the upper-layer rubber compound and the lower-layer rubber compound together; and when the driving component restarts to move the rubber compound, the driving component fully presses the upper-layer rubber compound and the lower-layer rubber compound together.

In an optional embodiment, the lamination process for the RFID electronic tag used in the tire further includes: when the driving component restarts to move the rubber compound, the driving component simultaneously moves the unpressed lower-layer rubber compound, the upper-layer rubber compound, and the RFID electronic tag between the upper-layer rubber compound and the RFID electronic tag in the conveying direction; when the rubber compound pressed with the RFID electronic tag is conveyed to an output side of the driving component, the driving component stops, and the pressing component operates again for pressing, and this step is repeated.

According to another aspect of the present application, a laminating mechanism for an RFID electronic tag used in a tire is provided, which is configured to perform the above lamination processes for the RFID electronic tag used in the tire, the laminating mechanism for the RFID electronic tag used in the tire includes: a frame having a side rail for conveying rubber compound; a driving component arranged on the frame and configured to move the rubber compound; and a pressing component movably arranged on the frame and configured to be located closer to a starting end of a conveying direction of the rubber compound than the driving component.

In an optional embodiment, the laminating mechanism for the RFID electronic tag used in the tire further includes a moving frame arranged on the frame and configured to be movable in the conveying direction, where the pressing component is rotatably arranged on the moving frame and capable of moving synchronously with the moving frame.

In an optional embodiment, the laminating mechanism for the RFID electronic tag used in the tire further includes a fixing roller connected to the frame, where the fixing roller, the pressing component, and the driving component are arranged sequentially in the conveying direction.

In an optional embodiment, the laminating mechanism for the RFID electronic tag used in the tire, where the driving components are multiple, and the driving components are arranged on both the upper and lower sides of the side rail, and a gap for the rubber compound to pass through is formed between the upper and lower driving components.

By applying the technical solution of this application and redesigning the lamination process, driving components are used to move the rubber compound, while pressing components perform the pressing function. This separates the pressing and driving steps in the lamination process. When rubber compound needs to be conveyed, the driving components move the rubber compound. When pressing is performed, the driving components stop moving, and the rubber compound also stops being conveyed. Since the rubber compound stops moving, the internal stress of the rubber compound is released, and then the pressing components can perform the pressing operation, fully or partially pressing the upper-layer rubber compound and the lower-layer rubber compound, as well as the RFID electronic tags between them, together to achieve the pressing. Then, the driving components restart to convey the pressed rubber compound or fully pressing them during the conveying process, thus realizing the lamination processing of the RFID electronic tags. The above-mentioned method presses the rubber compound and the RFID electronic tag together while the two layers of rubber compound are relatively stationary, thereby avoiding rubber deformation caused by continuous dragging of the rubber compound. In addition, it also minimizes the difference in tensile length between the upper and lower rubber compounds during the lamination process, solving the problems of rubber compound deformation and unstable RFID electronic tag posture in subsequent processes. This improves the stability of the two layers of rubber compound and the RFID electronic tag after lamination, largely avoids the impact of rubber compound deformation on subsequent processes, and reduces the generation of defective products.

### BRIEF DESCRIPTION OF THE DRAWINGS

The drawings constituting part of the present application are used to provide a further understanding of the present application. The exemplary embodiments and descriptions of the present application are used to explain the present application and do not constitute an improper limitation on the present application, in which:
Fig. 1 illustrates a flowchart of a lamination process for an RFID electronic tag used in a tire according to an embodiment of the present application;
Fig. 2 illustrates a schematic structural diagram of a lamination mechanism for an RFID electronic tag used in a tire according to an embodiment of the present application;
Fig. 3 illustrates a state diagram of the driving component conveying the rubber compound;
Fig. 4 illustrates a state diagram of the pressing component performing the pressing;
Fig. 5 illustrates a state diagram of the driving component restarting to convey the rubber compound.

The above-mentioned Figures include the following reference numbers: 10. Frame; 11. Side rail; 20. Driving component; 30. Pressing component; 40. Moving frame; 50. Fixing roller; 60. Tag placement mechanism; 70. Lower-layer rubber compound; 80. Upper-layer rubber compound; 90. RFID electronic tag.

### DESCRIPTION OF THE PREFERRED EMBODIMENTS

It should be noted that, in the absence of conflict, the embodiments and features in the embodiments of the present application can be combined with each other. The present application would be described in detail below with reference to the accompanying drawings and in combination with the embodiments.

To address the problem of deformation of RFID tags after lamination in existing lamination processes for the RFID tag, this application provides a lamination process for an RFID electronic tag used in a tire and a lamination mechanism for an RFID electronic tag used in a tire.

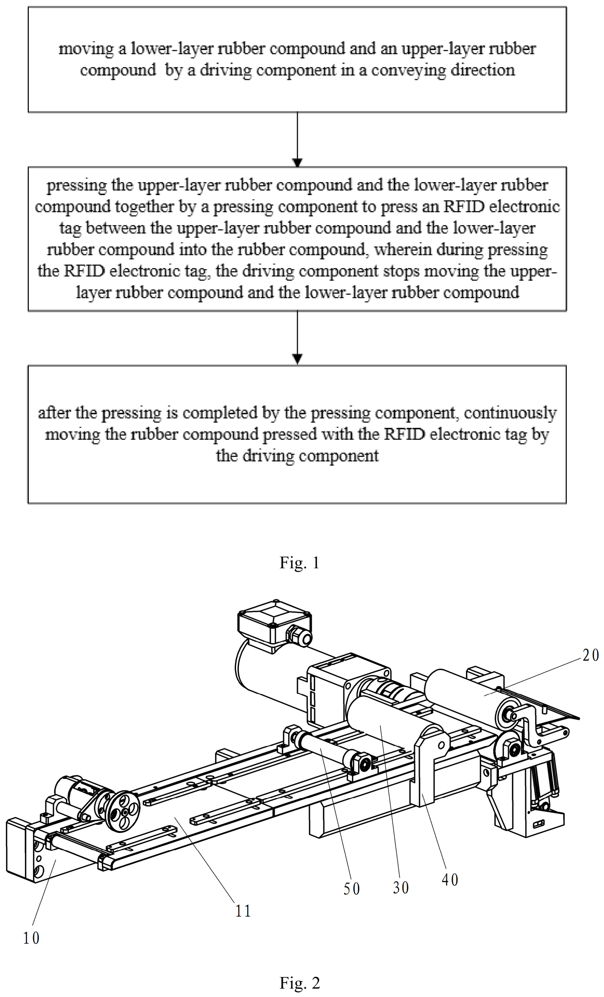

As shown in Fig. 1, a lamination process for an RFID electronic tag used in a tire may include: moving a lower-layer rubber compound 70 and an upper-layer rubber compound 80 by a driving component 20 in a conveying direction; pressing the upper-layer rubber compound 80 and the lower-layer rubber compound 70 together by a pressing component 30 to press an RFID electronic tag 90 between the upper-layer rubber compound 80 and the lower-layer rubber compound 70 into the rubber compound, where during pressing the RFID electronic tag 90, the driving component 20 stops moving the upper-layer rubber compound 80 and the lower-layer rubber compound 70; after the pressing is completed by the pressing component 30, continuously moving the rubber compound pressed with the RFID electronic tag 90 by the driving component 20.

This embodiment redesigns the lamination process, which employes a driving component 20 to move the rubber compound, while the pressing component 30 performs the pressing function. This separates the pressing and driving steps in the lamination process. When rubber compound needs to be conveyed, the driving component 20 moves the rubber compound. When pressing is required, the driving component 20 stops, and the rubber compound conveying also stops. This releases the internal stress of the rubber compound, allowing the pressing component 30 to perform the pressing operation, fully or partially pressing the upper-layer rubber compound 80, the lower-layer rubber compound 70, and the RFID electronic tag 90 between them together. The driving component 20 then restarts to convey the pressed rubber compound or fully press them during conveying, thus completing the lamination process of the RFID electronic tag 90. The above-described process presses the rubber compound and RFID tag together while the two layers of rubber are relatively stationary, which may avoid rubber deformation caused by continuous dragging of the rubber compound. It also eliminates the difference in tensile deformation between the upper-layer rubber compound and the lower-layer rubber compound during lamination, resolving the problems of rubber compound deformation and RFID tag instability in subsequent processes. This improves the stability of the laminated rubber compound and RFID tag, significantly mitigating the impact of rubber compound deformation on subsequent processes and reducing the generation of defective products.

In this embodiment, the pressing component 30 is a pressing roller, and the driving component 20 is a driving roller. The pressing component 30 and the driving component 20 can also adopt other structures; for example, the pressing component 30 may be a scraper or a single pressing plate.

In this embodiment, the lamination process for the RFID electronic tag used in the tire further includes: the pressing component 30 is movable. It should be noted that "movable" here does not simply mean movable; in fact, the pressing component 30 in this embodiment can both rotate around its own axis and move in a direction parallel to the conveying direction. The movement around its own axis is for rolling cooperation with the rubber compound, achieving a better pressing effect. Movement parallel to the conveying direction allows the pressing component 30 to press a certain length of rubber compound after the conveying stops, improving efficiency. When pressing is required, i.e., when the pressing component 30 is pressing the upper-layer rubber compound 80 and the lower-layer rubber compound 70, the pressing component 30 moves parallel to the conveying direction, thereby pressing the upper-layer rubber compound 80 and the lower-layer rubber compound 70 together within a predetermined distance, achieving the lamination of the RFID electronic tags 90 within the predetermined distance. During the aforementioned movement parallel to the conveying direction, the pressing component 30 also rotates around its own axis. When the pressing component 30 is a scraper, it does not need to rotate around its own axis; it only needs to move laterally. When the pressing component 30 is a single plate, it may move up and down to achieve pressing.

Furthermore, the lamination process for the RFID electronic tag used in the tire further includes: when the pressing component 30 presses the upper-layer rubber compound 80 and the lower-layer rubber compound 70, the pressing component 30 moves in the opposite direction to the conveying direction. For ease of explanation, in this embodiment, along the conveying direction of the rubber compound, a starting end of the conveying is called a first end, and an ending end of the conveying is called a last end. Thus, the conveying and pressing process is as follows: during conveying, the driving component 20 drives the rubber compound from the first end to the last end; during pressing, the driving component 20 stops, and the pressing component 30 moves a predetermined distance from the last end to the first end, pressing the rubber compound and the RFID electronic tag 90 together during the movement; after pressing is completed, the driving component 20 restarts to continue conveying the pressed rubber compound.

In this embodiment, the lamination process for the RFID electronic tag used in the tire further includes: a reset process of the pressing component 30 after pressing, that is, after the pressing component 30 completes the pressing of the RFID electronic tag 90, the pressing component 30 moves in the opposite direction to an initial position. The reverse reset movement of the pressing component 30 can occur simultaneously with the continued feeding of the rubber compound by the driving component 20, or the driving component 20 can continue feeding only after the pressing component 30 has completed its reverse reset. This allows the pressing component 30 to prepare for the next pressing operation after reset, enabling repeated pressing operations.

Optionally, full pressing between the rubber compound and the RFID tag 90 may be achieved solely by the pressing component 30, or jointly by the pressing component 30 and the driving component 20.

When the pressing component 30 is used for fully pressing, the lamination process for the RFID electronic tag used in the tire further includes: when the pressing component 30 presses the upper-layer rubber compound 80 and the lower-layer rubber compound 70, the pressing component 30 fully presses the upper-layer rubber compound 80 and the lower-layer rubber compound 70 together. In this way, the pressing process can be completed by the pressing component 30, that is, the pressing component 30 fully presses the upper-layer rubber compound 80 and the lower-layer rubber compound 70 together, completing the full lamination operation of the RFID electronic tag 90. At this time, the driving component 20 only serves to convey the rubber compound and does not play a role in pressing the rubber compound.

When pressing component 30 and driving component 20 are used together to achieve pressing, the lamination process for the RFID electronic tag used in the tire further includes: when pressing component 30 presses the upper-layer rubber compound 80 and the lower-layer rubber compound 70, pressing component 30 pre-presses the upper-layer rubber compound 80 and the lower-layer rubber compound 70, partially pressing them together. At this point, the upper-layer rubber compound 80 and the lower-layer rubber compound 70 are only pre-pressed together. Since they are stationary during pressing, this also helps to eliminate internal stress and prevent deformation. Subsequently, when driving component 20 restarts movement of the rubber compound, driving component 20 fully presses the upper-layer rubber compound 80 and the lower-layer rubber compound 70 together. In this two-step pressing process, some of the work of pressing component 30 is transferred to driving component 20, relatively reducing the requirements for pressing component 30. In this case, pressing component 30 plays a pre-pressing role, while driving component 20 plays a role in fully pressing and conveying.

It should be noted that the pre-pressing mentioned above does not mean that a portion of the upper-layer rubber compound and the lower-layer rubber compound are pressed while the other portion is not. Rather, it means that the two layers of rubber compound are pressed together, but the degree of pressing is insufficient to make them be a complete whole.

The specific lamination method mentioned above can be selected according to the actual situation.

In this embodiment, the lamination process for the RFID electronic tag used in the tire further includes: when the driving component 20 restarts to convey the rubber compound pressed with the RFID electronic tag 90, the driving component 20 also simultaneously moves the lower-layer rubber compound 70, the upper-layer rubber compound 80, and the RFID electronic tag 90 between them, which are not pressed at the beginning, in the conveying direction. When the driving component 20 conveys the rubber compound pressed with the RFID electronic tag 90 to an output side of the driving component 20, at this time, the pressed rubber compound and the RFID electronic tag 90 are outside of the pressing range of the pressing component 30. The driving component 20 stops, and the pressing component 30 restarts to press the next batch of rubber compound. This process is repeated to complete the lamination of the entire rubber compound and the RFID electronic tag 90.

As shown in Fig. 2, this embodiment also provides a lamination mechanism for an RFID electronic tag used in a tire, which is configured to perform the above-described the lamination process for the RFID electronic tag used in the tire. The lamination mechanism for the RFID electronic tag used in the tire includes a frame 10, a driving component 20, and a pressing component 30. The frame 10 has a side rail 11 for conveying rubber compound; the driving component 20 is arranged on the frame 10 and is used to convey the rubber compound; the pressing component 30 is movably arranged on the frame 10, and along the conveying direction of the rubber compound, the pressing component 30 is closer to the beginning of the conveying direction than the driving component 20.

This embodiment, by providing the pressing component 30, which serves as the main component for laminating the rubber compound and the RFID electronic tag 90 together, it can press the rubber compound and the RFID electronic tag 90 therein after the driving component 20 stops conveying the rubber compound and the rubber compound has completely stopped, thereby realizing the lamination process of the RFID electronic tag 90. In conjunction with the aforementioned lamination process, the lamination process for the RFID tag avoids rubber deformation caused by continuous dragging of the rubber compound, eliminates the difference in tensile deformation between the upper and lower-layer rubber compounds during lamination, solves the problems of rubber compound deformation and RFID tag instability in subsequent processes, improves the stability of the two layers of rubber compound and the RFID tag after lamination, largely avoids the impact of rubber compound deformation on subsequent processes, and reduces the generation of defective products.

In this embodiment, the lamination mechanism for the RFID electronic tag used in the tire further includes a moving frame 40, which is connected to the frame 10 or a corresponding driving mechanism and is movable in the conveying direction. A pressing component 30 is rotatably arranged on the moving frame 40, the pressing component 30 has a rotation axis perpendicular to the conveying direction. The pressing component 30 moves synchronously with the moving frame 40. Thus, the moving frame 40 allows the pressing component 30 to both rotate around its own axis for smooth pressing and move in the conveying direction for pressing over a predetermined distance. The specific structure of the moving frame 40 may be configured as needed. In this embodiment, a guide rail is provided on the frame 10, and the moving frame 40 is movably arranged on the guide rail. The moving frame 40 has extension arms on both sides of the side rail 11, and these extension arms are connected to both ends of the pressing component 30, thereby achieving the effect of moving the pressing component 30 along the conveying direction and allowing the pressing component 30 to rotate. The specific structure of the moving frame 40 is not limited to the manner described in this embodiment.

In this embodiment, the laminating mechanism for the RFID electronic tag used in the tire further includes a fixing roller 50 connected to the frame 10. The lower-layer rubber compound 70 is typically laid directly onto the side rail 11 after being output from the roll, while the upper-layer rubber compound 80, after being output from the roll, passes around the fixing roller 50. The conveying direction of the upper-layer rubber compound 80 is adjusted from its original inclined conveying towards the beginning to a slightly inclined conveying direction approximately parallel to the side rail 11 towards the end. The fixing roller 50 is located above the side rail 11 and maintains a certain distance from it, which ensures that the upper-layer rubber compound 80 and the lower-layer rubber compound 70 do not directly contact each other. Instead, they gradually approach each other during conveying until they are pressed together by the pressing component 30.

This laminating mechanism for the RFID electronic tag used in the tire is generally used in conjunction with a tag placement mechanism 60. The tag placement mechanism 60 is located at the beginning of the side rail 11 and is used to place RFID electronic tags 90 onto the lower-layer rubber compound 70. In this embodiment, along the conveying direction, the tag placement mechanism 60, the fixing roller 50, the pressing component 30, and the driving component 20 are arranged sequentially, and the tag placement mechanism 60, the fixing roller 50, the pressing component 30, and at least one driving component 20 are located above the side rail 11. Thus, the tag placement mechanism 60 can place the RFID electronic tag 90 on the upper surface of the lower-layer rubber compound 70. As it is continuously conveyed, the lower-layer rubber compound 70 aligns vertically with the upper-layer rubber compound 80 as it passes the fixing roller 50, and then is pressed by the pressing component 30, causing the RFID electronic tag 90 to be laminated between the upper-layer rubber compound 80 and the lower-layer rubber compound 70. Furthermore, the movement range of the pressing component 30 is the distance range between the fixing roller 50 and the driving component 20.

In this embodiment, there are multiple driving components 20, and driving components 20 are provided on both the upper and lower sides of the side rail 11. This embodiment uses two driving components 20, which are aligned vertically. A gap is formed between the two driving components 20, and the rubber compound passes through this gap. The friction between the rubber compound and the driving component 20 within the gap enables the driving component 20 to convey and move the rubber compound. The number of driving components 20 can be increased as needed.

When the driving component 20 does not need to perform its pressing function, its vertical position does not need to be adjusted and can be fixed. However, when the driving component 20 needs to perform its function, its vertical position can be adjusted. One or more driving components 20 can be moved vertically, so that when the driving component 20 performs pressing, its relative displacement between its upper and lower parts can be adjusted to bring them closer together, thereby pressing the rubber compound. The upper and lower driving components 20 have a pressing state for pressing the rubber compound and a releasing state for not pressing the rubber compound. When the driving component 20 is in the pressing state, the distance between the upper and lower driving components 20 is a first distance; when the driving component 20 is in the releasing state, the distance between the upper and lower driving components 20 is a second distance, and the first distance is smaller than the second distance. When the driving component 20 needs to perform the pressing function, it can be adjusted to the pressing state; when it does not need to perform the pressing function, it can be adjusted to the releasing state. Whether in the pressing or releasing state, the driving component 20 has the function of driving the rubber compound convey.

The laminating mechanism for the RFID electronic tag used in the tire of this embodiment also includes a driving mechanism. There can be one or more driving mechanisms, and the specific type can be selected as needed, such as robotic, electric, hydraulic, or pneumatic. The driving mechanism is connected to the moving frame 40, driving components 20, and other components that need to move, thereby driving the movement of the components. In addition, an encoder can be provided to measure the displacement generated during rubber compound convey.

The overall process of the lamination mechanism for the RFID electronic tag used in the tire in this embodiment performing the lamination process for the RFID electronic tag used in the tire may be as follows:

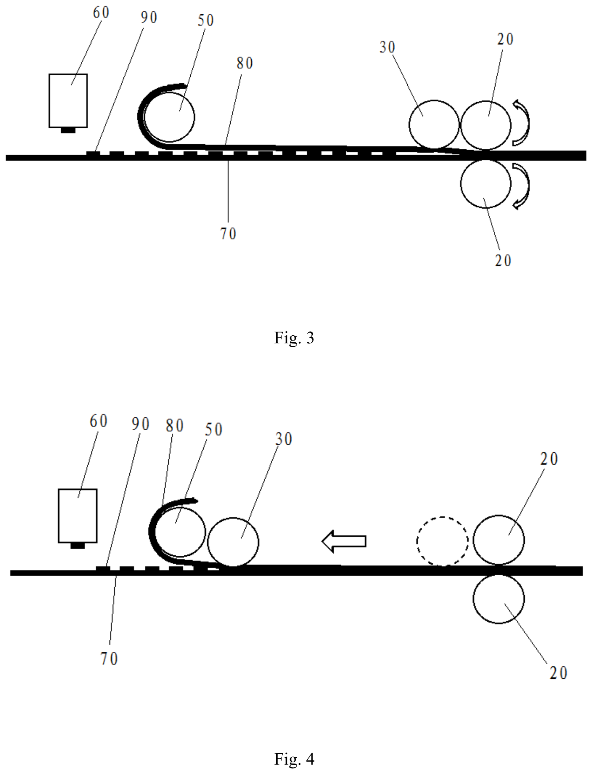

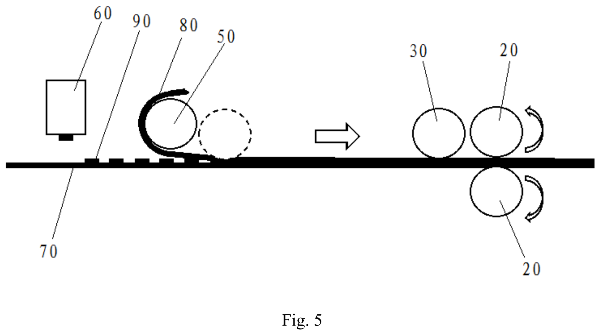

Taking the direct and full lamination by the pressing component 30 as an example, the upper-layer rubber compound 80 and the lower-layer rubber compound 70 are preset on the side rail 11 to enable them to be conveyed. After the parameters of the tag placement mechanism 60 are set, as shown in Fig. 3, the driving component 20 is activated, and the upper-layer rubber compound 80 and the lower-layer rubber compound 70 are conveyed along the side rail 11 under the drive of the driving component 20. When the conveying reaches a certain length, the driving component 20 stops, and the pressing component 30 is activated. As shown in Fig. 4, the pressing component 30 moves in the opposite direction of the conveying direction toward the fixing roller 50, and presses the upper-layer rubber compound 80 and the lower-layer rubber compound 70 together within a certain distance, thereby realizing the lamination of the RFID electronic tag 90. Then, the pressing component 30 reverses its movement to reset, while the driving component 20 continues to convey the pressed rubber compound, as shown in Fig. 5, until the pressed rubber compound is conveyed to the output side of the driving component 20, i.e., out of the pressing range of the pressing component 30. At this point, the unpressed rubber compound is still within the pressing range of the pressing component 30. The driving component 20 stops conveying again, and the pressing component 30 starts pressing again. This process is repeated to complete the automatic lamination process.

It should be noted that "multiple" in the above embodiments refers to at least two.

From the above description, it can be seen that the embodiments of this application achieve at least the following technical effects:
1. It solves the problem of easy deformation of RFID electronic tags after lamination in the prior art;
2. It avoids rubber deformation caused by continuous dragging of the rubber compound, solving the problem of rubber compound deformation in subsequent processes;
3. It eliminates the difference in tensile deformation between the upper-layer rubber compound and lower-layer rubber compound during the lamination process, solving the problem of unstable RFID electronic tag posture in subsequent processes;
4. It improves the stability of the two layers of rubber compound after lamination with the RFID tag, largely avoiding the impact of rubber compound deformation on subsequent processes and reducing the generation of defective products.

The embodiments described above are only some embodiments of this application, not all embodiments. Based on the embodiments in this application, all other embodiments obtained by those skilled in the art without creative effort should fall within the scope of protection of this application.

The above descriptions are only preferred embodiments of this application and are not intended to limit this application. For those skilled in the art, this application can have various modifications and variations. Any modifications, equivalent substitutions, or improvements made within the spirit and principles of this application shall be included within the scope of protection of this application.

## Claims

1. A lamination process for an RFID electronic tag used in a tire, **characterized by** comprising:
moving a lower-layer rubber compound (70) and an upper-layer rubber compound (80) by a driving component (20) in a conveying direction;
pressing the upper-layer rubber compound (80) and the lower-layer rubber compound (70) together by a pressing component (30) to press an RFID electronic tag (90) between the upper-layer rubber compound (80) and the lower-layer rubber compound (70) into the rubber compound, wherein during pressing the RFID electronic tag (90), the driving component (20) stops moving the upper-layer rubber compound (80) and the lower-layer rubber compound (70);
after the pressing is completed by the pressing component (30), continuously moving the rubber compound pressed with the RFID electronic tag (90) by the driving component (20).

2. The lamination process for the RFID electronic tag used in the tire according to claim 1, **characterized in that**, further comprising:
the pressing component (30) is movably arranged, and when the pressing component (30) presses the upper-layer rubber compound (80) and the lower-layer rubber compound (70), the pressing component (30) moves in a direction parallel to the conveying direction, and presses the upper-layer rubber compound (80) and the lower-layer rubber compound (70) together within a predetermined distance.

3. The lamination process for the RFID electronic tag used in the tire according to claim 2, **characterized in that**, further comprising:
when the pressing component (30) presses the upper-layer rubber compound (80) and the lower-layer rubber compound (70), the pressing component (30) moves in a direction opposite to the conveying direction.

4. The lamination process for the RFID electronic tag used in the tire according to claim 1, **characterized in that**, further comprising:
after the pressing component (30) completes the pressing of the RFID electronic tag (90), the pressing component (30) moves in the reverse direction to an initial position.

5. The lamination process for the RFID electronic tag used in the tire according to claim 1, **characterized in that**, further comprising:
when the pressing component (30) presses the upper-layer rubber compound (80) and the lower-layer rubber compound (70), the pressing component (30) fully presses the upper-layer rubber compound (80) and the lower-layer rubber compound (70) together.

6. The lamination process for the RFID electronic tag used in the tire according to claim 1, **characterized in that**, further comprising:
when the pressing component (30) presses the upper-layer rubber compound (80) and the lower-layer rubber compound (70), the pressing component (30) pre-presses the upper-layer rubber compound (80) and the lower-layer rubber compound (70), and partially presses the upper-layer rubber compound (80) and the lower-layer rubber compound (70) together; and when the driving component (20) restarts to move the rubber compound, the driving component (20) fully presses the upper-layer rubber compound (80) and the lower-layer rubber compound (70) together.

7. The lamination process for the RFID electronic tag used in the tire according to claim 1, **characterized in that**, further comprising:
when the driving component (20) restarts to move the rubber compound, the driving component (20) simultaneously moves the unpressed lower-layer rubber compound (70), the upper-layer rubber compound (80), and the RFID electronic tag (90) between the upper-layer rubber compound (80) and the RFID electronic tag (90) in the conveying direction; when the rubber compound pressed with the RFID electronic tag (90) is conveyed to an output side of the driving component (20), the driving component (20) stops, and the pressing component (30) operates again for pressing, and this step is repeated.

8. A laminating mechanism for an RFID electronic tag used in a tire, **characterized in that**, configured to perform the lamination process for the RFID electronic tag used in the tire according to any one of claims 1 to 7, the laminating mechanism for the RFID electronic tag used in the tire comprising:
a frame (10) having a side rail (11) for conveying rubber compound;
a driving component (20) arranged on the frame (10) and configured to move the rubber compound; and
a pressing component (30) movably arranged on the frame (10) and configured to be located closer to a starting end of a conveying direction of the rubber compound than the driving component (20).

9. The laminating mechanism for the RFID electronic tag used in the tire according to claim 8, **characterized in that**, further comprising:
a moving frame (40) arranged on the frame (10) and configured to be movable in the conveying direction, wherein the pressing component (30) is rotatably arranged on the moving frame (40) and capable of moving synchronously with the moving frame (40).

10. The laminating mechanism for the RFID electronic tag used in the tire according to claim 8, **characterized in that**, further comprising:
a fixing roller (50) connected to the frame (10), wherein the fixing roller (50), the pressing component (30), and the driving component (20) are arranged sequentially in the conveying direction.

11. The laminating mechanism for the RFID electronic tag used in the tire according to claim 8, **characterized in that**, the driving components (20) are multiple, and the driving components (20) are arranged on both the upper and lower sides of the side rail (11), and a gap for the rubber compound to pass through is formed between the upper and lower driving components (20).
